(19) Europäisches Patentamt
European Patent Office
Office européen des brevets

(11) **EP 2 887 539 B1**

(12) **FASCICULE DE BREVET EUROPEEN**

(45) Date de publication et mention
de la délivrance du brevet:
**24.11.2021 Bulletin 2021/47**

(51) Int Cl.:
*H02P 29/024* *(2016.01)*     *H02P 23/28* *(2016.01)*
*H02P 29/68* *(2016.01)*     *B60L 15/20* *(2006.01)*

(21) Numéro de dépôt: **14004310.0**

(22) Date de dépôt: **19.12.2014**

(54) **Système d'entraînement, procédé de commande d'un onduleur et programme d'ordinateur associé**

Antriebssystem, Steuerverfahren eines Wechselrichters und entsprechendes Computerprogramm

Drive system, method for controlling an inverter and associated computer program

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2013 FR 1363249**

(43) Date de publication de la demande:
**24.06.2015 Bulletin 2015/26**

(73) Titulaire: **Valeo Systèmes de Contrôle Moteur
95800 Cergy Saint Christophe (FR)**

(72) Inventeur: **De Sousa, Luis
95670 Eragny Sur Oise (FR)**

(74) Mandataire: **Novembre, Christophe Adelphe
Valeo Systèmes de Contrôle Moteur
14, avenue des Béguines
Immeuble le DELTA
95800 Cergy St Christophe (FR)**

(56) Documents cités:
**WO-A1-2012/143643**     **JP-A- H1 023 793**
**JP-A- H01 283 084**

• **WELCHKO B A ET AL: "The influence of topology
selection on the design of EV/HEV propulsion
systems", IEEE POWER ELECTRONICS
LETTERS, IEEE SERVICE CENTER, NEW YORK,
NY, US, vol. 99, no. 2, 1 June 2003 (2003-06-01),
pages 36-40, XP011428021, ISSN: 1540-7985,
DOI: 10.1109/LPEL.2003.821033**

**EP 2 887 539 B1**

**Description**

La présente invention concerne un système d'entraînement rotatif, un procédé de commande d'un onduleur et un programme d'ordinateur associé.

Il est connu d'utiliser un système d'entraînement rotatif du type comportant :

- une source de tension,
- un moteur électrique comportant :

    - un stator avec des phases indépendantes,
    - un rotor,

- un onduleur destiné à connecter chaque phase à la source de tension pour générer des courants de phase, et
- un dispositif de commande de l'onduleur.

L'onduleur comporte généralement des interrupteurs pour former les courants de phase, ces interrupteurs utilisant par exemple la technologie des semiconducteurs.

En fonctionnement normal, les courants de phase du moteur électrique sont généralement alternatifs. Ainsi, chaque interrupteur alterne des premières phases de commutation pour créer un courant de phase dans la phase considérée et des secondes phases dans lesquelles il reste ouvert. Pendant les premières phases, l'interrupteur s'échauffe, tandis que la chaleur est évacuée pendant les secondes phases. Lorsque le rotor tourne à une vitesse qui n'est pas trop faible, la fréquence d'alternance entre les deux phases est suffisante pour que l'interrupteur ne s'échauffe pas trop car la constante de temps électrique est plus grande que la constante de temps thermique. Ainsi, les ondulations de courant de phase vont générer des ondulations de température de jonction dont la crête est supportable par l'interrupteur.

En revanche, lorsque le rotor est bloqué ou qu'il tourne à très faible vitesse, alors les courants de phases sont plus proches de courants continus, et l'interrupteur reste alors dans la première phase. Dans les cas les plus défavorables, le courant de phase est égal au courant de crête (courant maximum). Or, plus le courant de phase est élevé plus l'échauffement est important. En outre, comme le courant augmente en même temps que le couple, ce problème est exacerbé lorsqu'un couple élevé doit être fourni par le moteur électrique. Cette situation se produit par exemple lorsque l'on cherche à maintenir un véhicule en côte. Le couple est alors maximal, tandis que la vitesse est nulle ou très faible.

Il existe déjà des solutions au problème précédent.

Par exemple, il est possible de diminuer la fréquence de découpage (et donc de commutation de l'interrupteur) pour réduire les pertes par commutation. L'interrupteur ayant moins de pertes, il peut tolérer le fort courant. Cette solution présente comme inconvénient de parfois générer un fort bruit acoustique. En outre, la majorité des pertes sont des pertes par conduction, de sorte que le gain est faible.

Une autre solution est de diminuer le courant de crête entraînant une diminution du couple, éventuellement après un certain délai pour protéger les interrupteurs. La diminution du couple entraine éventuellement un changement de position d'équilibre. Cette nouvelle position d'équilibre avec des courants moins importants permet le couple maximal. Cette solution n'est cependant pas acceptable, car elle ne permet par de maitriser le couple et de contrôler la position du véhicule.

Le document JP H 01283084 A décrit un système avec un onduleur configuré de sorte qu'un courant de troisième harmonique soit injecté dans les courants de phase lorsque le rotor est bloqué.

Le document JPH1023793 fait partie de l'art antérieur de la présente demande.

Il peut ainsi être souhaité de trouver une autre solution pour limiter les échauffements dans l'onduleur.

Afin de résoudre au moins en partie le problème précédent, il est proposé véhicule automobile comprenant un système d'entraînement rotatif du type précité, tel que décrit à la revendicaiton 1.

De façon optionnelle, la composante homopolaire est harmonique.

De façon optionnelle également, la composante homopolaire est de troisième harmonique.

De façon optionnelle également, la composante homopolaire présente une valeur de crête valant une fraction prédéterminée de la valeur de crête des composantes non-homopolaires des courants de phase.

De façon optionnelle également, la composante homopolaire présente une valeur de crête valant $1-\sqrt{3}/2$ fois la valeur de crête des composantes non-homopolaires des courants de phase.

Il est également proposé un procédé de commande tel que décrit à la revendication 6.

Il est également proposé un programme d'ordinateur comportant des instructions qui, lorsqu'exécutées sur un ordinateur, entraînent la réalisation par l'ordinateur des étapes d'un procédé selon l'invention.

Un exemple de réalisation de l'invention va à présent être décrit, en référence aux dessins annexés, parmi lesquels :

- la figure 1 est un schéma d'un système d'entraînement rotatif selon l'invention,
- la figure 2 est un schéma-blocs d'un procédé de commande d'un onduleur du système de la figure 1,
- la figure 3 regroupe des graphes illustrant les composantes des courants de phase, et
- la figure 4 regroupe des graphes illustrant l'effet de l'ajout d'une composante homopolaire dans les courants de phase.

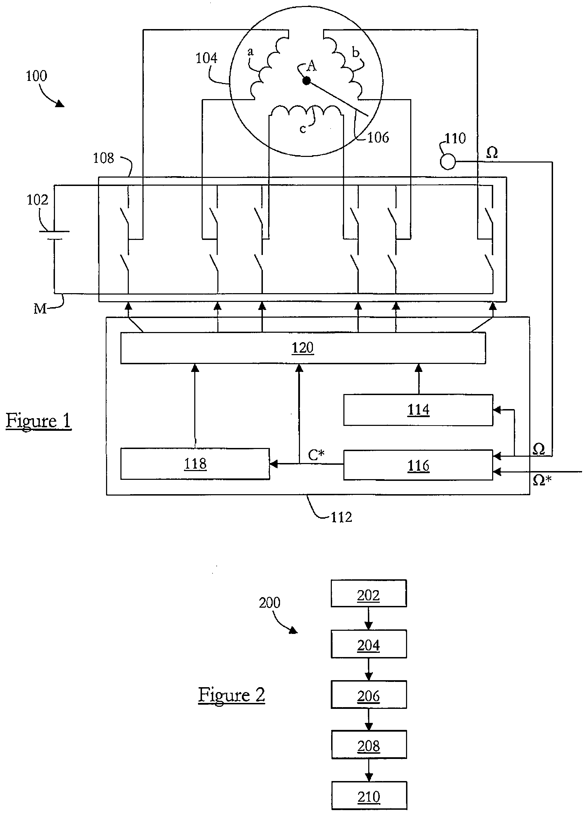

En référence à la figure 1, un système d'entraînement rotatif 100 mettant en œuvre l'invention va à présent être décrit.

Le système d'entraînement rotatif 100 comporte tout d'abord une source de tension 102 destinée dans l'exemple décrit à fournir une tension continue V par rapport à un potentiel électrique de référence M (masse électrique).

Le système d'entraînement rotatif 100 comporte en outre un moteur électrique 104. Comme cela est connu en soi, le moteur électrique 104 comporte un stator (non représenté) et un rotor 106 destiné à tourner par rapport au stator autour d'un axe de rotation A, à une vitesse $\Omega$ et en fournissant un couple électromagnétique. Le stator comporte des phases, au nombre de trois dans l'exemple décrit et désignées par les références a, b et c. Les phases a, b, c présentent chacune deux bornes. En outre, les phases a, b, c sont indépendantes, c'est-à-dire qu'elle ne sont pas reliées par une de leurs bornes à un point commun, communément appelé « neutre ». Les phases a, b, c sont destinées à être respectivement parcourues par des courants de phase, notés ia, ib et ic.

Le système d'entraînement rotatif 100 comporte en outre un onduleur 108 destiné à connecter chaque phase a, b, c du moteur électrique 104 à la source de tension continue 102. L'onduleur 108 comporte plusieurs bras, un par borne des phases a, b, c. Ainsi, dans l'exemple décrit, l'onduleur 108 comporte six bras. Chaque bras est destiné à connecter la borne à laquelle il est associé à la tension V ou bien à la masse M de la source de tension 102. Chaque bras comporte ainsi deux interrupteurs commandés montés en série et reliés en leur milieu à la borne associée, tandis que les deux extrémités du bras sont respectivement reliés à la tension V et à la masse électrique M. L'onduleur 108 est ainsi destiné à appliquer à chaque phase a, b, c : la tension +V, son opposé —V, ou bien la tension nulle lorsque les deux bornes de la phase considérée sont toutes les deux connectées au même point (V ou M). Les interrupteurs sont par exemple des transistors bipolaires à grille isolée, également désignés par l'acronyme IGBT (de l'anglais « Insulated Gate Bipolar Transistor »).

Le système d'entraînement rotatif 100 comporte en outre un capteur 110 destiné à mesurer la vitesse $\Omega$ de rotation du rotor 106 par rapport au stator.

Le système d'entraînement rotatif 100 comporte en outre un dispositif 112 de commande de l'onduleur 108. Dans l'exemple décrit, le dispositif de commande 112 est destiné à fournir une commande à l'onduleur 108 en fonction de la vitesse $\Omega$ et d'une consigne de vitesse $\Omega^*$ de rotation du rotor 106 par rapport au stator. La consigne de vitesse $\Omega^*$ est par exemple reçue d'un régulateur de vitesse lorsque le système d'entraînement rotatif 100 est implémenté dans un véhicule automobile. La commande de l'onduleur 108 correspond généralement à des commandes à très haute fréquence d'ouverture/fermeture des interrupteurs des bras de l'onduleur 108. Le dispositif de commande 112 est par exemple réalisé sous la forme d'un calculateur. Dans ce cas, les unités du dispositif de commande 112 détaillées ci-dessous sont par exemple réalisées sous la forme de programmes informatiques exécutés par le calculateur et/ou de circuits électroniques dédiés du calculateur.

Le dispositif de commande 112 comporte tout d'abord une unité 114 pour déterminer si la fréquence fondamentale des courants de phase est inférieure à un seuil de fréquence valant au plus 100 Hz, de préférence au plus 50 Hz. Dans l'exemple décrit, la fréquence fondamentale des courants de phase est déterminée à partir de la vitesse $\Omega$ de rotation du rotor 106. En effet, dans un moteur électrique, il arrive fréquemment que les phases alternent plusieurs fois autour de l'axe A (le moteur électrique comporte alors plusieurs pôles) afin d'obtenir un facteur de démultiplication entre la fréquence électrique et la fréquence mécanique de rotation du rotor 106. Ainsi, la fréquence fondamentale des courants de phase est égale à la fréquence de rotation du rotor 106 multipliée par le facteur de démultiplication.

Le dispositif de commande 112 comporte en outre une unité 116 de détermination d'une consigne de couple électromagnétique $C^*$ du moteur électrique 104 à partir de la vitesse $\Omega$ et de la consigne de vitesse $\Omega^*$.

Le dispositif de commande 112 comporte en outre une unité 118 pour déterminer si la consigne de couple est supérieure à un seuil de couple valant au moins 100 N, de préférence au moins 200 N.

Le dispositif de commande 112 comporte en outre une unité 120 de génération de la commande de l'onduleur 108. Cette unité 120 est configurée de sorte que la commande provoque l'apparition d'une composante homopolaire de courant de phase dans les phases a, b, c du moteur électrique 104 lorsque la fréquence fondamentale est déterminée comme inférieure au seuil de fréquence et lorsque la consigne de couple est déterminée comme supérieure au seuil de couple. Dans l'exemple décrit, lorsque la fréquence fondamentale est déterminée comme supérieure au seuil de fréquence ou lorsque la consigne de couple est déterminée comme inférieure au seuil de couple, l'unité 120 est en outre configurée de sorte que la commande de l'onduleur 108 équilibre les phases a, b, c, c'est-à-dire de sorte qu'il n'y ait pas de composante homopolaire.

Dans l'exemple décrit, la composante homopolaire est de troisième harmonique et présente une valeur de crête valant une fraction prédéterminée de la valeur de crête des composantes non-homopolaire des courants de phase, de préférence $1 - \sqrt{3}/2$ fois la valeur de crête des composantes non-homopolaires.

Il sera apprécié qu'en cas de blocage complet du rotor, la fréquence fondamentale est nulle. Dans ce cas, la composante homopolaire est donc constante.

En référence à la figure 2, un procédé 200 de commande de l'onduleur 108 va à présent être décrit.

Au cours d'une étape 202, le capteur 110 mesure la vitesse $\Omega$ et fournit cette mesure au dispositif de commande 112.

Au cours d'une étape 204, l'unité 114 déduit la fréquence fondamentale des courants de phase à partir de la vitesse Ω et détermine si cette fréquence fondamentale est inférieure au seuil de fréquence.

Au cours d'une étape 206, l'unité 116 détermine la consigne de couple C* à partir de la vitesse Ω et de la consigne de vitesse Ω*.

Au cours d'une étape 208, l'unité 118 détermine si la consigne de couple C* est supérieure au seuil de couple.

Au cours d'une étape 210, l'unité 120 reçoit la consigne de couple C* ainsi que les résultats des déterminations réalisées par les unités 114 et 118. Si ces résultats indiquent que la fréquence fondamentale est inférieure au seuil de fréquence et la consigne de couple supérieure au seuil de couple, l'unité 120 génère une commande pour les interrupteurs de l'onduleur 108 provoquant l'apparition d'une composante homopolaire de courant de phase dans les phases a, b, c. Cette composante homopolaire s'ajoute à la composante non-homopolaire qui, elle, est destinée à faire atteindre au moteur électrique 104 la consigne de couple C*. Dans le cas contraire, l'unité 120 génère une commande équilibrant les courants de phase, de sorte qu'il ne reste que la composante non-homopolaire dans chaque phase a, b, c.

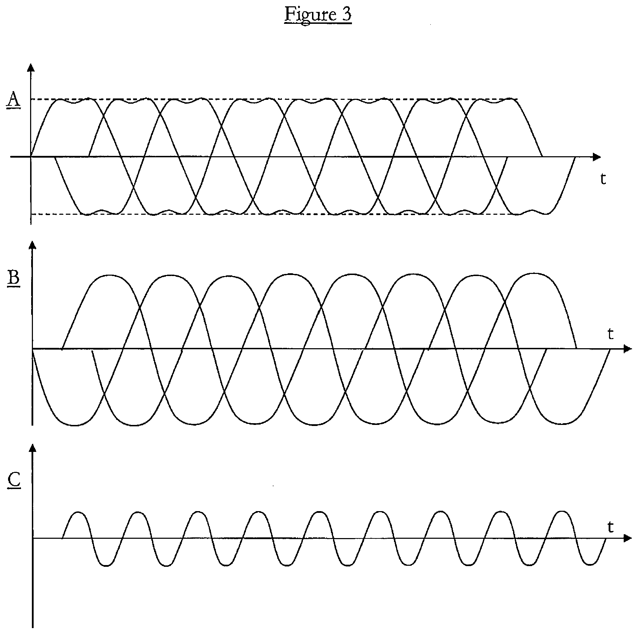

En référence à la figure 3, le graphe A montre la forme des courants de phase au cours du temps lorsqu'une composante homopolaire de troisième harmonique est présente.

Le graphe B montre les composantes non-harmoniques, tandis que le graphe C montre la composante homopolaire présente dans chaque phase a, b, c.

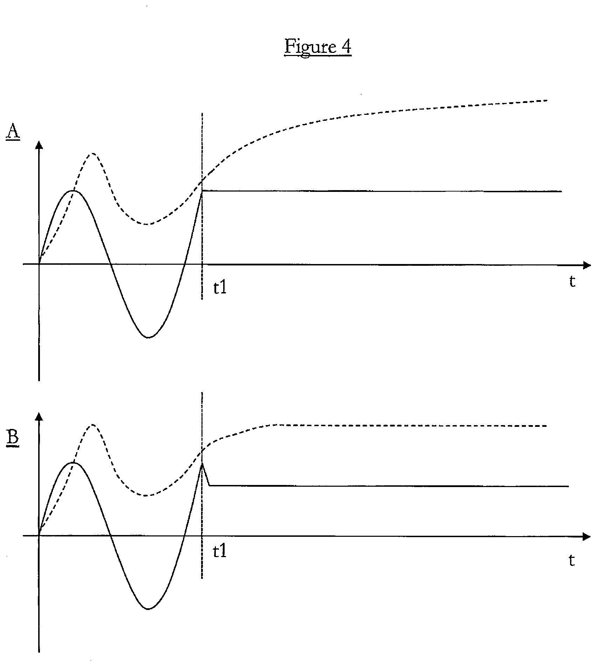

En référence à la figure 4, le graphe A montre un courant de phase (trait plein) au cours du temps, et la température (trait pointillé) d'un interrupteur dont la fermeture fait passer un courant dans cette phase, dans le cas de l'état de la technique. À l'instant t1, un blocage du rotor se produit. Il en résulte que le courant dans la phase reste à une valeur constante. À partir de ce moment, l'interrupteur dont la température est représentée commute sans arrêt pour maintenir le courant constant. En l'absence de composante homopolaire, il en résulte un échauffement important de cet interrupteur.

Le graphe B montre la même situation pour le système d'entraînement 100 décrit précédemment. Il sera apprécié que, suite au blocage du rotor, une composante homopolaire est générée, cette dernière faisant diminuer le courant de phase parcourant la phase considérée, et limitant donc l'échauffement de l'interrupteur.

L'invention n'est pas limitée à l'exemple de réalisation précédemment décrit, mais au contraire définie par les revendications annexées, dont la portée s'étend à toutes les modifications et configurations alternatives pouvant être conçues à partir des connaissances générales de l'homme du métier.

Par exemple, une composante homopolaire pourrait être générée dès que la fréquence fondamentale des courants homopolaires passe sous le seuil de fréquence, indépendamment de la valeur de la consigne de couple.

## Revendications

1. Véhicule automobile comprenant un système d'entraînement rotatif (100) comportant :

   - une source de tension (102) présentant une tension (V) et une masse (M),
   - un moteur électrique (104) configuré pour maitriser le couple et de contrôler la position du véhicule automobile, le moteur électrique (104) comportant :

      - un stator avec trois phases indépendantes (a, b, c) ayant chacune deux bornes et n'étant pas reliées par une de leurs bornes à un point commun,
      - un rotor (106),

   - un onduleur (108) destiné à connecter chaque phase (a, b, c) à la source de tension (102) pour générer des courants de phase, l'onduleur (108) comportant six bras, un par borne des phases (a, b, c), chaque bras étant configuré pour connecter la borne à laquelle il est associé à la tension (V) ou bien à la masse (M) de la source de tension (102), et
   - un dispositif de commande (112) de l'onduleur (108),

   le système d'entraînement rotatif (100) étant **caractérisé en ce que** le dispositif de commande (112) comporte :

      - une unité (114) configurée pour déterminer si la fréquence fondamentale des courants de phase est inférieure à un seuil de fréquence valant au plus 100 Hz,
      - une unité (116) de détermination d'une consigne de couple électromagnétique du moteur électrique (104) et une unité configurée pour déterminer si la consigne de couple est supérieure à un seuil de couple valant au moins 100 N m,
      - une unité (120) de génération d'une commande, configurée de sorte que, lorsque la fréquence fondamentale est déterminée comme inférieure au seuil de fréquence et lorsque la consigne de couple est déterminée comme supérieure au seuil de couple, la commande provoque l'apparition d'une composante homopolaire dans les courants de phase.

2. Véhicule automobile selon la revendication 1, dans lequel la composante homopolaire est harmonique.

3. Véhicule automobile selon la revendication 2, dans lequel la composante homopolaire est de troisième harmonique.

4. Véhicule automobile selon la revendication 2 ou 3, dans lequel la composante homopolaire présente une valeur de crête valant une fraction prédéterminée de la valeur de crête des composantes non-homopolaires des courants de phase.

5. Véhicule automobile selon la revendication 4, dans lequel la composante homopolaire présente une valeur de crête valant $1 - \sqrt{3}/2$ fois la valeur de crête des composantes non-homopolaires des courants de phase.

6. Procédé de commande d'un onduleur (108) destiné à connecter à une source de tension continue (102) présentant une tension (V) et une masse (M), chaque phase (a, b, c) d'un stator d'un moteur électrique (104) configuré pour maîtriser le couple et contrôler la position d'un véhicule automobile, les phases (a, b, c) ayant chacune deux bornes et n'étant pas reliées par une de leurs bornes à un point commun, l'onduleur (108) comportant six bras, un par borne des phases (a, b, c), chaque bras étant configuré pour connecter la borne à laquelle il est associé à la tension (V) ou bien à la masse (M) de la source de tension (102), le procédé étant **caractérisé en ce qu'**il comporte :

- la détermination si la fréquence fondamentale des courants de phase est inférieure à un seuil de fréquence valant au plus 100 Hz,
- la détermination d'une consigne de couple électromagnétique du moteur électrique (104),
- la génération d'une commande qui, lorsque la fréquence fondamentale est déterminée comme inférieure au seuil de fréquence et lorsque la consigne de couple est déterminée comme supérieure à un seuil de couple valant au moins 100 N m, provoque l'apparition d'une composante homopolaire dans les courants de phase.

7. Programme d'ordinateur comportant des instructions qui, lorsqu'exécutées sur un ordinateur du véhicule automobile de l'une des revendications 1 à 5, entraînent la réalisation par l'ordinateur des étapes du procédé de la revendication 6.

**Patentansprüche**

1. Kraftfahrzeug umfassend ein Drehantriebsystem (100), das Folgendes aufweist:

- eine Spannungsquelle (102), die eine Spannung (V) und eine Masse (M) aufweist,

- einen Elektromotor (104), der dazu ausgebildet ist, das Drehmoment zu beherrschen und die Position des Kraftfahrzeugs zu steuern, wobei der Elektromotor (104) Folgendes aufweist:

- einen Stator mit drei unabhängigen Phasen (a, b, c), die jeweils zwei Anschlüsse aufweisen und nicht durch einen ihrer Anschlüsse mit einem gemeinsamen Punkt verbunden sind,
- einen Rotor (106),

- einen Wechselrichter (108), der dazu bestimmt ist, jede Phase (a, b, c) an die Spannungsquelle (102) anzuschließen, um Phasenströme zu erzeugen, wobei der Wechselrichter (108) sechs Arme aufweist, einen pro Anschluss der Phasen (a, b, c), wobei jeder Arm dazu ausgebildet ist, den Anschluss, dem er zugeordnet ist, an die Spannung (V) oder die Masse (M) der Spannungsquelle (102) anzuschließen, und
- eine Steuerungsvorrichtung (112) des Wechselrichters (108),

wobei das Drehantriebsystem (100) **dadurch gekennzeichnet ist, dass** die Steuerungsvorrichtung (112) Folgendes aufweist:

- eine Einheit (114), die dazu ausgebildet ist, zu bestimmen, ob die Grundfrequenz der Phasenströme unter einer Frequenzschwelle von höchstens 100 Hz liegt,
- eine Einheit (116) zur Bestimmung einer Vorgabe für elektromagnetisches Drehmoment des Elektromotors (104) und eine Einheit, die dazu ausgebildet ist, zu bestimmen, ob die Drehmomentvorgabe über einer Drehmomentschwelle von mindestens 100 Nm liegt,
- eine Einheit (120) zur Erzeugung eines Befehls, die so ausgebildet ist, dass, wenn die Grundfrequenz als unter der Frequenzschwelle bestimmt ist und wenn die Drehmomentvorgabe als über der Drehmomentschwelle bestimmt ist, der Befehl das Auftreten einer gleichpoligen Komponente in den Phasenströmen bewirkt.

2. Kraftfahrzeug nach Anspruch 1, wobei die gleichpolige Komponente harmonisch ist.

3. Kraftfahrzeug nach Anspruch 2, wobei die gleichpolige Komponente drittharmonisch ist.

4. Kraftfahrzeug nach Anspruch 2 oder 3, wobei die gleichpolige Komponente einen Spitzenwert mit einem Wert eines vorbestimmten Bruchteils des Spitzenwerts der nicht-gleichpoligen Komponenten der Phasenströme aufweist.

**5.** Kraftfahrzeug nach Anspruch 4, wobei die gleichpolige Komponente einen Spitzenwert mit dem 1- $\sqrt{3}/2$ -fachen Wert der nicht-gleichpoligen Komponenten der Phasenströme aufweist.

**6.** Verfahren zur Steuerung eines Wechselrichters (108), der dazu bestimmt ist, jede Phase (a, b, c) eines Stators eines Elektromotors (104) der dazu bestimmt ist, das Drehmoment zu beherrschen und die Position eines Kraftfahrzeugs zu steuern, an eine Gleichspannungsquelle (102) anzuschließen, die eine Spannung (V) und eine Masse (M) aufweist, wobei die Phasen (a, b, c) jeweils zwei Anschlüsse aufweisen und nicht durch einen ihrer Anschlüsse mit einem gemeinsamen Punkt verbunden sind, wobei der Wechselrichter (108) sechs Arme aufweist, einen pro Anschluss der Phasen (a, b, c), wobei jeder Arm dazu ausgebildet ist, den Anschluss, dem er zugeordnet ist, an die Spannung (V) oder die Masse (M) der Spannungsquelle (102) anzuschließen, wobei das Verfahren **dadurch gekennzeichnet ist, dass** es Folgendes aufweist:

- Bestimmen, ob die Grundfrequenz der Phasenströme unter einer Frequenzschwelle von höchstens 100 Hz liegt,
- Bestimmen einer Vorgabe für elektromagnetisches Drehmoment des Elektromotors (104),
- Erzeugen eines Befehls, der, wenn die Grundfrequenz als unter der Frequenzschwelle bestimmt ist und wenn die Drehmomentvorgabe als über einer Drehmomentschwelle von mindestens 100 Nm bestimmt ist, das Auftreten einer gleichpoligen Komponente in den Phasenströmen bewirkt.

**7.** Computerprogramm, aufweisend Anweisungen, die bei Ausführung auf einem Computer des Kraftfahrzeugs nach einem der Ansprüche 1 bis 5 die Durchführung der Schritte des Verfahrens nach Anspruch 6 durch den Computer herbeiführen.

**Claims**

**1.** Motor vehicle comprising a rotary drive system (100) comprising:

- a voltage source (102) having a voltage (V) and a ground (M),
- an electric motor (104) configured to control the torque and to control the position of the motor vehicle, the electric motor (104) comprising:

  - a stator with three independent phases (a, b, c) each having two terminals and not being connected via one of their terminals to a common point,
- a rotor (106),
- an inverter (108) intended to connect each phase (a, b, c) to the voltage source (102) in order to generate phase currents, the inverter (108) comprising six arms, one per terminal of the phases (a, b, c), each arm being configured to connect the terminal with which it is associated to the voltage (V) or else to the ground (M) of the voltage source (102), and

- a device (112) for controlling the inverter (108), the rotary drive system (100) being **characterized in that** the control device (112) comprises:

  - a unit (114) configured to determine whether the fundamental frequency of the phase currents is lower than a frequency threshold equal to, at most, 100 Hz,
  - a unit (116) for determining an electromagnetic torque setpoint for the electric motor (104) and a unit configured to determine whether the torque setpoint is greater than a torque threshold equal to, at least, 100 Nm,
  - a unit (120) for generating a command, configured such that, when the fundamental frequency is determined as being lower than the frequency threshold and when the torque setpoint is determined as being greater than the torque threshold, the command causes the appearance of a homopolar component in the phase currents.

**2.** Motor vehicle according to Claim 1, in which the homopolar component is a harmonic.

**3.** Motor vehicle according to Claim 2, in which the homopolar component is a third harmonic.

**4.** Motor vehicle according to either of Claims 2 and 3, in which the homopolar component has a peak value equal to a predetermined fraction of the peak value of the non-homopolar components of the phase currents.

**5.** Motor vehicle according to Claim 4, in which the homopolar component has a peak value equal to 1 - √3/2 times the peak value of the non-homopolar components of the phase currents.

**6.** Method for controlling an inverter (108) intended to connect each phase (a, b, c) of a stator of an electric motor (104) to a DC voltage source (102) having a voltage (V) and a ground (M), configured to control the torque and control the position of a motor vehicle, the phases (a, b, c) each having two terminals and not being connected via one of their terminals to a common point, the inverter (108) comprising six arms, one per terminal of the phases (a, b, c), each arm being configured to connect the terminal with which it is associated to the voltage (V) or else to the ground (M) of the voltage source (102), the method being **characterized in that** it comprises:

- the determination of whether the fundamental frequency of the phase currents is lower than a frequency threshold equal to, at most, 100 Hz,
- the determination of an electromagnetic torque setpoint for the electric motor (104),
- the generation of a command which, when the fundamental frequency is determined as being lower than the frequency threshold and when the torque setpoint is determined as being greater than a torque threshold equal to, at least, 100 Nm, causes the appearance of a homopolar component in the phase currents.

7. Computer program comprising instructions which, when executed on a computer of the motor vehicle according to one of Claims 1 to 5, lead to the implementation by the computer of the steps of the method according to Claim 6.

100

104

a    b

A

c

106

110    Ω

108

102

M

120

114

118    C*    116    Ω

Ω*

112

<u>Figure 1</u>

200

202

204

<u>Figure 2</u>    206

208

210

Figure 3

## Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H01283084 A

- JP H1023793 B